(19) **Europäisches Patentamt**

**European Patent Office**

**Office européen des brevets**

(11) Publication number: **0 093 787**
**B1**

(12) **EUROPEAN PATENT SPECIFICATION**

(45) Date of publication of patent specification: **08.07.87**

(21) Application number: **82103959.1**

(22) Date of filing: **06.05.82**

(51) Int. Cl.⁴: **F 02 M 31/12**

(54) Heated diesel fuel filter.

(43) Date of publication of application:
**16.11.83 Bulletin 83/46**

(45) Publication of the grant of the patent:
**08.07.87 Bulletin 87/28**

(84) Designated Contracting States:
**DE FR GB IT SE**

(56) References cited:
**EP-A-0 045 707**
**DE-A-2 606 113**
**DE-A-2 752 457**
**DE-A-3 021 742**
**GB-A-2 018 890**
**US-A-3 214 020**
**US-A-3 235 084**

(73) Proprietor: **TECHNAR INCORPORATED**
**205 North Second Avenue**
**Arcadia California 91006 (US)**

(72) Inventor: **Bell, Lon Edward**
**1819 North Grand Oaks**
**Altadena California 91101 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to diesel fuel heaters, and more particularly, to a heater for dissolving wax in the fuel.

In DE—A—2606113 there is described an arrangement for heating the fuel for diesel engines to prevent the fuel filter from becoming clogged with wax crystals which form in the fuel at low ambient temperatures. The arrangement described in the above-identified application utilizes a fully enclosed chamber and filter element therein and heater means positioned in the inlet region of the chamber adjacent the filter element and includes an electrical resistance heating element comprising a metal grid having openings through which the fuel passes before passing through the filter element. The metal grid is positioned in the path of fuel passing from the fuel inlet to the filter element for heating all fuel passing through the filter element. By warming the fuel, the wax crystals are caused to go back into solution and thereby pass through the fuel filter. However, the amount of energy required to raise the temperature of the fuel sufficiently above ambient temperature to dissolve the wax in the fuel is quite substantial. This may place a severe strain on the capacity of the electrical system at a time when low ambient temperature conditions also reduce the capacity of the battery.

The present invention is directed to an improved fuel heater that operates to melt the wax crystals and keep them melted as they pass through the fuel filter. The metal grid is positioned immediately adjacent the filter element over substantially the entire upstream surface of the crystal element so that the fuel flow through the metal grid at any position is limited by the flow of fuel through the filter element at the same position.

The essential feature of the subject invention is the very close uniformly spaced proximity of the heater to the surface of the filter. Because of this very close proximity, any localized clogging by wax on the surface of the filter itself cannot act to divert the flow of fluid passing through the heater to another unclogged area of the filter, but the localized clogging of the filter reduces or completely blocks the flow of fluid through the heater at the point where wax build-up takes place. This results in localized heating since the reduced flow of fluid through the heater at the position of wax build-up results in localized heat build-up. This localized heat build-up at the point of clogging results in localized heating of the wax, and results in the wax being melted or going back into solution, relieving the localized clogging condition. In the subject device, heat energy per unit fluid volume is applied selectively to quiescent or clogged zones on the surface of the filter by the very close proximity of the heater to the surface of the filter over the entire surface of the filter. While the heater does not have to be in actual contact with the surface of the filter, it should be sufficiently close that the fluid after it passes through the heater cannot be diverted laterally from a point where a clogged condition exists on the surface of the filter to a region where there is no clogging. The filter and heater must be close enough so that any reduction in flow at a point on the filter results in a corresponding localized reduction of flow through the heater, permitting a localized build-up at the clogged location.

For a more complete understanding of the invention, reference should be made to the accompanying drawings, wherein:

FIG. 1 is a diagrammatic showing of the invention;

FIG. 2 is a top view with the cover removed of a filter according to one embodiment of the invention;

FIG. 3 is a sectional view taken substantially on the line 3—3 of FIG. 2;

FIG. 4 is a top view of another embodiment of the present invention; and

FIG. 5 is a detailed view of a heated filter element construction.

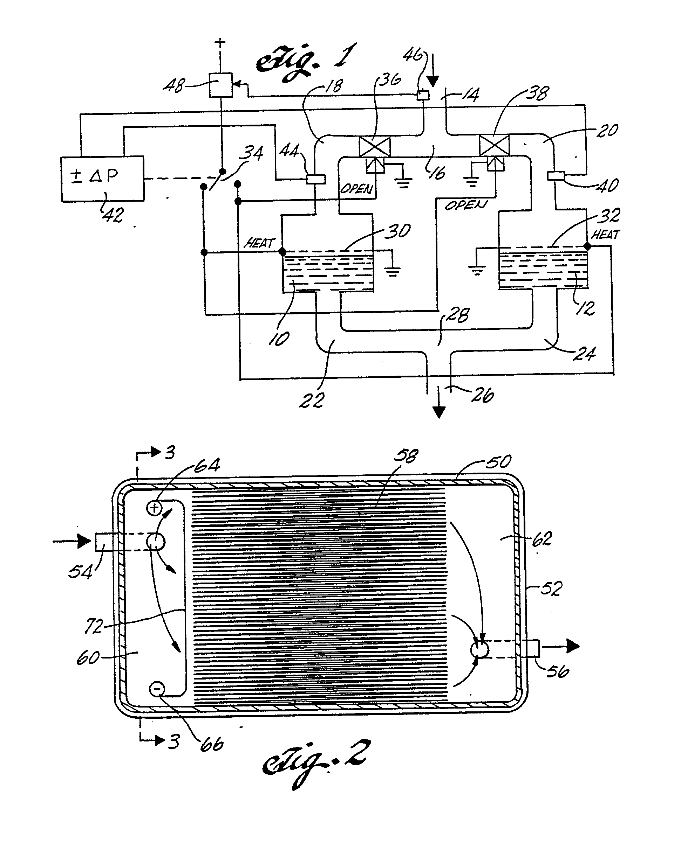

Referring to FIG. 1, there is shown a fuel filtering system including a pair of filters 10 and 12. The fuel is directed through the filters from an input fuel line 14 which is connected through a T-junction 16 to a pair of filter input lines 18 and 20 connected to the input of the filters 10 and 12. Output lines 22 and 24 from the filters connect to an output line 26 through a T-junction 28. Thus two parallel flow paths are provided through the filters.

As mentioned above, when diesel fuel is chilled by low ambient temperature conditions, wax begins to precipitate out of the fuel. This wax tends to accumulate in the filters 10 and 12, clogging the filters and substantially reducing or cutting off the flow of fuel to the output line 26. According to the present invention, each filter unit is provided with a heating element in the form of a screen or grid, as indicated at 30 and 32, which is made of an electrically conductive material that is heated by a flow of current passing through the grid. To this end, each of the grids is connected through a switch 34 to one terminal of a battery or other electrical power source (not shown). The switch 34 allows one or the other of the heater grids 30 and 32 to be heated. The switch 34 is also used to control the flow of fluid through the respective filters by selectively operating a pair of solenoid valves 36 and 38.

It will be seen that when the heater 30 is turned on by the switch 34, the valve 38 is turned on and the valve 36 is turned off. This interrupts the flow of oil through the filter 10 when the heater 30 is turned on, but allows flow of oil through the filter 12 while the heater 32 is turned off. As the oil flows through the filter 12, the wax crystals build up on the surface of the filter and on the grid of the heater, gradually reducing the flow of oil through the filter. At the same time, wax which has accumulated on the surface of the filter 10 is heated by the heater 30, causing the wax to melt and go back into solution. As flow is reduced through the filter 12, pressure builds up in the line 20. This pressure is sensed by a suitable pressure sensitive transducer 40 which is connected to a relay control circuit 42 for operating the switch 34. The relay control circuit 42 also senses the pressure in the line 18 by means of a pressure transducer 44. As the pressure builds up in the line 20, the switch 34 is actuated, causing the valve 36 to open and the valve 38 to close and, at the same time, causing the heating element 30 to be turned off and the heating element 32 to be turned on.

With the wax having been melted in the filter 10, fuel again flows freely through the filter 10 while the wax built up in the filter 12 is dissolved by the heater 32. As the wax begins to build up in the filter 10, pressure in the line 18 begins to build up to the point that the switch 34 is again actuated to reverse the condition of the valves and heaters.

By the arrangement shown in FIG. 1, it will be seen that oil flows alternately through the two filters. The wax is directly heated by the heater in the non-flowing filter, causing the wax to go back in solution. This is accomplished without attempting to raise the temperature of the oil as it flows through the filter system. A minimum of electrical energy is expended in clearing the filters of wax at the same time providing a continuous flow of filtered oil through the fuel line.

While the arrangement in FIG. 1 shows electrically controlled valves, it will be understood that the pressure built up can be used to operate directly a check valve to cut off flow through the clogged filter. Alternatively, the system of FIG. 1 can be operated without any valves at all by utilizing the inherent characteristic of the system to produce buildup of wax and a reduced flow alternately in one filter and the other. Furthermore, both heaters can be operated continuously at a low level of heat. The system tends to be self-oscillating since any buildup of wax reduces the flow, allowing the temperature of the heater to rise and thereby increasing the rate at which the wax is dissolved. Thus the buildup and melting of wax takes place cyclically in the respective filters, with the flow tending to alternate between one filter and then the other.

A temperature sensing element 46 may be provided in the inlet line 14 for sensing when the temperature of the fuel is above a predetermined level at which the wax remains in liquid form. The element 46 operates a switch device 48 to interrupt power to the heaters when the temperature of the fuel rises to a safe level.

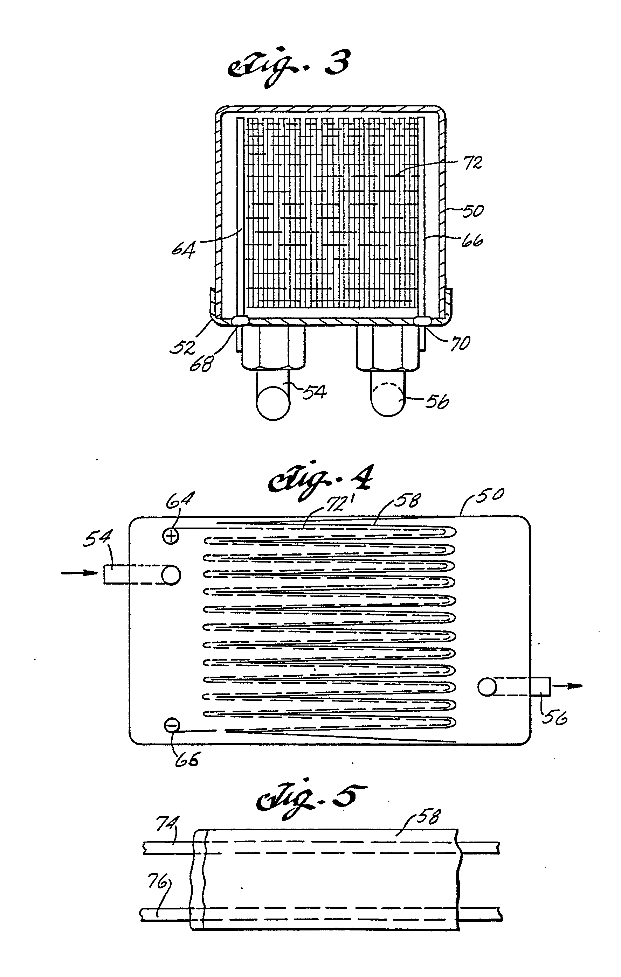

While the dual filter arrangement of FIG. 1 provides continuous flow with minimum energy input, a low energy system can be provided within a single filter element. The essential feature of the invention is that there is a concentration of wax buildup and selective heating of the wax to melt the wax at the filter so that it does not solidify before it passes out through the filter element. Referring to FIGS. 2 and 3, there is shown a filter construction incorporating the features of the present invention which can be operated either as a single filter system or as a dual filter system of the type described in FIG. 1. The filter itself is of conventional construction, including an outer housing or can 50 having a lid 52. An inlet pipe 54 connects through the lid adjacent one end of the can 50, and an outlet pipe 56 connects through the lid at the other end of the can. A filter element 58, folded in accordian fashion, extends across the center of the can and lid, dividing the can into an inlet chamber 60 and an outlet chamber 62. Oil entering the inlet chamber passes through the filter element 58 into the outlet chamber. The ends of the filter element 58 are glued or cemented to the sides of the can while the edges of the filter are glued or cemented to the bottom of the can and to the lid, so that all the oil must pass through the filter element 58 in passing from the inlet chamber to the outlet chamber.

A pair of electrodes 64 and 66 extend through the lid 52 into the inlet chamber 60. The electrodes are supported by the lid through conventional glass bead or other suitable insulators 68 and 70. A heater element 72, preferably in the form of a wire mesh screen made of suitable electrically conductive material, is connected to and extends between the electrodes 64 and 66. As shown in FIG. 2, the screen is positioned in close proximity to the pleated edges of the filter element 58 so as to bring the heater into as close a proximity to the filter element as is practical. Oil entering the filter first passes through the heater screen 72. As wax crystals accumulate on the screen and in the space between the screen and the filter, oil flow is reduced, allowing the temperature of the heater to rise and causing a slow flow of highly heated fuel to melt the wax and allow it to pass on through the filter.

The filter of FIGS. 2 and 3 can be used in a dual filter arrangement such as described in connection with FIG. 1 or may be operated as a single filter unit. Generally, flow is not uniform over the entire surface of the heater so that as flow becomes restricted due to accumulation of wax in one area, flow increases in another area. In the area in which flow is decreased, the wax is heated directly by the heater, causing it to dissolve in the fuel and allowing flow in that area to increase. At the same time an area having greater flow rate begins to clog, reducing flow and causing the temperature to rise. This cycling of accumulation, heating, dissolving, followed by increased flow with cooling and more clogging, takes place over the entire surface of the heater, but the phase relationship of the cycle is different in different areas, resulting in fairly uniform total flow rates. The energy input to the heater is substantially less than would be required to heat all of the oil passing through the filter up to a temperature sufficient to keep the wax in solution.

FIG. 4 shows an alternative filter design in which the heater grid 72' is folded in accordian fashion so as to extend into the individual pleats in the folded filter 58. This arrangement allows a greater surface of the filter to be in intimate contact with the heater.

FIG. 5 shows a further embodiment in which one or more heater strips such as indicated at 74 and 76 are embedded in the filter material so as to directly heat the surface of the filter on which the wax crystals accumulate. The filter material with the embedded heater strips can be folded in accordian fashion and employed in the filter in the manner described in FIGS. 2—4.

In any of the arrangements described, power may be cycled on and off to the heater to reduce the average power requirements. The turning off and on of the heater may be synchronized with the change in pressure due to alternate clogging and redissolving of the wax with the attendant change in flow rate and back pressure in the filter, as described above in connection with FIG. 1. A temperature sensitive material and switch may be incorporated to supply heat only below a predetermined temperature level. Whether the heater is cycled on or off or is allowed to operate continuously on a relatively low average energy input, there is a concentration of wax crystals in the immediate vicinity of the heater, the wax crystal then being melted sufficiently to pass on through the filter by the close proximity of the heater.

**Claims**

1. A heated filter for diesel fuel or the like, comprising a housing (50) forming a fully enclosed chamber, a filter element (58) in the chamber dividing the chamber into an inlet region (60) and an outlet region (62) on opposite sides of the filter element, a fuel inlet (54) to the inlet region of the chamber, a fuel outlet (56) to the outlet region of the chamber, and heater means positioned in the inlet region adjacent the filter element and including an electrical resistance heating element (72, 72') comprising a metal grid having openings through which the fuel passes before passing through the filter element (58), the metal grid being positioned in the path of fuel passing from the fuel inlet (54) to the filter element (58) for heating all fuel passing through the filter element (58), characterised in that the metal grid is positioned immediately adjacent the filter element (58) over substantially the entire upstream surface of the filter element (58) so that the fuel flow through the metal grid at any position is limited by the flow of fuel through the filter element (58) at the same position.

2. The filter of claim 1, characterised in that the filter element (58) is made of thin pleated filter material and the metal grid (72') is folded so as to extend into the folds of the pleated filter element (58).

3. The filter of claim 1 or 2 characterised in that the heating element (74, 76) is embedded in the filter element (58).

**Patentansprüche**

1. Beheiztes Filter für Dieselbrennstoff oder ähnliches, mit einem eine vollständig geschlossene Kammer bildenden Gehäuse (50), einem Filterelement (58) in der Kammer, welches die Kammer in einen Einlaßbereich (60) und einen Auslaßbereich (62) auf gegenüberliegenden Seiten des Filterelementes unterteilt, einem Brennstoffeinlaß (54) zu dem Einlaßbereich der Kammer, einem Brennstoffauslaß (56) zu dem Auslaßbereich der Kammer, einer Heizeinrichtung, die dem Filterelement benachbart in dem Einlaßbereich angeordnet ist und ein elektrisches Widerstandsheizelement (72, 72') mit einem Metallgitter aufweist, das Öffnungen besitzt, durch welche der Brennstoff hindurchtritt, bevor er durch das Filterelement (58) hindurchgeht, wobei das Metallgitter in dem Weg des Brennstoffs angeordnet ist, der von dem Brennstoffeinlaß (54) zu dem Filterelement (58) hindurchgeht, um den gesamten, durch das Filterelement (58) hindurchgehenden Brennstoff zu erwärmen, dadurch gekennzeichnet, daß das Metallgitter unmittelbar dem Filterelement (58) benachbart über der im wesentlichen gesamten stromaufwärtigen Oberflache des Filterelements (58) angeordnet ist, so daß der Brennstofffluß durch das Metallgitter an jeder Stelle durch den Brennstofffluß durch das Filterelement (58) an der gleichen Stelle begrenzt ist.

2. Filter nach Anspruch 1, dadurch gekennzeichnet, daß das Filterelement (58) aus dünnem, gefältetem Filtermaterial hergestellt ist und daß das Metallgitter (72) so gefaltet ist, daß es sich in die Falten des gefälteten Filterelements (58) erstreckt.

3. Filter nach Anspruch 1 oder 2, dadurch gekennzeichnet, daß das Heizelement (74, 76) in das Filterelement (58) eingebettet ist.

**Revendications**

1. Un filtre chauffé pour carburant diesel ou similaire, comprenant un boîtier (50) constituant une chambre complètement fermée, un élément filtrant (58) dans la chambre divisant la chambre en une zone d'arrivée (60) et une zone de sortie (62) de chaque côté de l'élément filtrant, une arrivée de carburant (54) vers la zone d'arrivée de la chambre, une sortie de carburant (56) vers la zone de sortie de la chambre, et un dispositif de chauffage situé dans la zone d'arrivée contiguë à l'élément filtrant et comprenant une résistance électrique de chauffage (72, 72') comprenant une grille métallique ayant des orifices par lesquels passe le carburant avant de passer à travers l'élément filtrant (58), la grille métallique étant située sur la trajectoire du passage du carburant, de l'arrivée de carburant (54) jusqu'à l'élément filtrant (58) afin de chauffer tout le carburant passant à travers l'élément filtrant (58), caractérisé en ce que cette grille métallique est immédiatement contiguë à l'élément filtrant (58) essentiellement par-dessus la totalité de la surface en amont de l'élément filtrant (58) de façon que l'écoulement du carburant à travers la grille métallique soit limité, quel que soit l'endroit, par l'écoulement du carburant à travers l'élément filtrant (58) au même endroit.

2. Le filtre selon la revendication 1, caractérisé en ce que l'élément filtrant (58) est fait à partir d'une fine matière filtrante plissée et la grille métallique (72') est pliée de façon à s'étendre dans les plis de l'élément filtrant plissé (58).

3. Le filtre selon la revendication 1 ou 2 caractérisé en ce que l'élément de chauffage (74, 76) est logé dans l'élément filtrant (58).

Fig. 1

Fig. 2

1

*Fig. 3*

*Fig. 4*

*Fig. 5*